(19) Europäisches Patentamt
European Patent Office
Office européen des brevets

(11) **EP 2 937 987 B1**

(12) **FASCICULE DE BREVET EUROPEEN**

(45) Date de publication et mention de la délivrance du brevet:
**26.12.2018 Bulletin 2018/52**

(51) Int Cl.:
**H02P 1/04** *(2006.01)*

(21) Numéro de dépôt: **15164482.0**

(22) Date de dépôt: **21.04.2015**

(54) **PROCÉDÉ ET DISPOSITIF DE COMMANDE POUR SYSTÈME DE DÉMARRAGE PROGRESSIF DE MOTEUR EXPLOITANT UNE MESURE DE LA DERIVÉE DU COURANT**

STEUERVERFAHREN UND -VORRICHTUNG FÜR PROGRESSIVES ANLASSSYSTEM EINES MOTORS, DAS EIN MASS DER STROMVARIANTE NUTZT

CONTROL METHOD AND DEVICE FOR A SOFT-START SYSTEM OF AN ENGINE USING A MEASUREMENT OF THE CURRENT DERIVATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2014 FR 1453644**

(43) Date de publication de la demande:
**28.10.2015 Bulletin 2015/44**

(73) Titulaire: **Schneider Electric Industries SAS
92500 Rueil-Malmaison (FR)**

(72) Inventeurs:
• **Penkov, Delcho
38050 Grenoble Cedex 9 (FR)**
• **Dentella, Alain
38050 Grenoble Cedex 9 (FR)**
• **Herriot, Yann
38050 Grenoble Cedex 9 (FR)**

(74) Mandataire: **Brevalex
95, rue d'Amsterdam
75378 Paris Cedex 8 (FR)**

(56) Documents cités:
WO-A2-01/89073        FR-A1- 2 980 058
US-A- 5 008 608        US-A1- 2013 285 592

• SMEETS R P P ET AL: "Evaluation of high-voltage circuit breaker performance with a new validated arc model", IEE PROCEEDINGS: GENERATION, TRANSMISSION AND DISTRIBUTION, INSTITUTION OF ELECTRICAL ENGINEERS, GB, vol. 147, no. 2, 16 mars 2000 (2000-03-16) , pages 121-125, XP006014184, ISSN: 1350-2360, DOI: 10.1049/IP-GTD:20000238

**Description**

**DOMAINE TECHNIQUE**

Le domaine de l'invention est celui des moteurs électriques, et plus particulièrement celui du contrôle du démarrage de tels moteurs au moyen d'un système de démarrage progressif interposé entre le moteur et la source d'alimentation électrique.

**ÉTAT DE LA TECHNIQUE ANTÉRIEURE**

Lors du démarrage d'un moteur électrique, celui-ci réalise un appel de courant sur le réseau électrique qui l'alimente. Il s'ensuit une baisse de la tension du réseau qui peut provoquer des disfonctionnement de certaines charges sensibles, et le cas échéant des délestages sur le réseau.

Pour éviter ce problème, il est connu, par exemple de la demande de brevet WO 01/89073 A2, ou FR 2980058 de connecter indirectement le moteur sur le réseau via un système de démarrage progressif connu sous le nom de « soft-starter » et qui par interrupteurs commandés permet d'élever progressivement la valeur de la tension efficace appliquée au moteur.

Dans de tels systèmes, les interrupteurs commandés sont réalisés par des composants semi-conducteurs, notamment des thyristors. De ce fait, les interrupteurs commandés sont fragiles et sensibles aux tensions et courants transitoires auxquels ils sont soumis lors des commutations.

Il est courant d'utiliser un même système de démarrage progressif pour démarrer plusieurs moteurs de manière séquentielle. Dès lors, on comprend qu'une panne sur le système de démarrage peut provoquer des pertes substantielles de production dans certaines applications.

Aussi, il apparaît important de fiabiliser le fonctionnement de ces systèmes de démarrage, en particulier de fiabiliser le fonctionnement des systèmes de démarrage de moteurs dont les tensions nominales sont supérieures à 500 V, voire supérieures à 1000 V, voire égales ou supérieures à 5,5 kV, du fait des valeurs des tensions et des courants transitoires auxquels sont soumis les interrupteurs commandés dans ces cas.

On observe en particulier un courant transitoire oscillatoire traversant un thyristor lors de sa commutation de fermeture. Ce courant transitoire, qui peut être approché par une sinusoïde haute fréquence amortie, étant proportionnel à la tension présente aux bornes du thyristor juste avant cette commutation, la demande de brevet WO 2013/038094 A2 de la Demanderesse préconise d'actionner la fermeture d'un thyristor à un instant choisi dans des plages temporelles pendant lesquelles la tension transitoire qui se développe aux bornes du thyristor suite à l'interruption de courant est minimale. Cette fermeture est ainsi commandée selon un mode dit de commande gamma, où la fermeture est commandée à un certain angle gamma après le passage à zéro du courant traversant le thyristor, par opposition à un mode dit de commande alpha où la fermeture est commandée à un certain angle alpha après le passage à zéro de la tension alternative de la source.

Des mesures de la tension aux bornes du thyristor nécessitent un traitement du signal assez sophistiqué, notamment un échantillonnage haute fréquence, afin de détecter les minima de tensions. Par ailleurs, de telles mesures complexifient la conception de l'armoire du système de démarrage progressif, et donc en augmentent le coût. Un emplacement doit effectivement être trouvé pour loger le capteur de tension ce qui engendre en outre des contraintes en termes d'isolation. En outre, la réalisation de mesures de tension aux bornes d'un thyristor apparaît assez peu pratique, notamment dans les applications à tensions nominales de l'ordre de quelques kilovolts où l'on retrouve plusieurs thyristors connectés en série.

Dans les applications actuelles réalisant une commande gamma, des transformateurs de courant conventionnels, du type à noyau magnétique, sont utilisés pour détecter le passage à zéro du courant. Ces transformateurs introduisent une déviation de phase qui dépend de la fréquence du courant. Une compensation précise de cette déviation est difficile à réaliser, et la détection des instants de passage à zéro est en réalité assez imprécise (précision de l'ordre de 100 µs). De plus, ces capteurs introduisent généralement un décalage (« offset ») qui lui aussi rend la mesure très imprécise.

**EXPOSÉ DE L'INVENTION**

L'invention a pour objectif principal d'améliorer la précision d'une commande de démarrage d'un moteur électrique, notamment celle faisant l'objet de la demande de brevet susmentionnée de la Demanderesse. L'invention peut avantageusement être utilisée lorsqu'on souhaite connaître précisément le moment de blocage d'un semi-conducteur.

A cet égard, l'invention propose un procédé selon la revendication 1.

Certains aspects préférés mais non limitatifs de ce procédé sont définis dans les revendications dépendantes 2 à 9.

L'invention s'étend à un système de démarrage d'un moteur électrique selon la revendication 10.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma d'une installation comprenant un dispositif de commande d'un moteur électrique selon un mode de réalisation possible de l'invention ;

- la figure 2 est un graphique temporel centré sur une phase d'ouverture de l'interrupteur commandé illustrant les évolutions du courant parcourant l'interrupteur et du potentiel électrique en aval de l'interrupteur ;
- la figure 3 est un graphique temporel centré sur une phase d'ouverture de l'interrupteur commandé illustrant les évolutions du courant parcourant l'interrupteur et de la dérivée du courant parcourant l'interrupteur ;
- la figure 4 est un graphique temporel centré sur une phase d'ouverture de l'interrupteur commandé illustrant les évolutions du potentiel électrique en aval de l'interrupteur et de la dérivée du courant parcourant l'interrupteur ;
- la figure 5 est un graphique temporel centré sur une phase d'ouverture de l'interrupteur commandé illustrant les évolutions du potentiel électrique en aval de l'interrupteur et du signal rectangulaire dont les fronts correspondent aux instants de passage à zéro de la dérivée du courant parcourant l'interrupteur ;
- la figure 6 est un graphique temporel représentant l'évolution de la tension aux bornes de l'interrupteur commandé suite à la commutation d'ouverture de celui-ci.

## EXPOSÉ DÉTAILLÉ DE MODES DE RÉALISATION PARTICULIERS

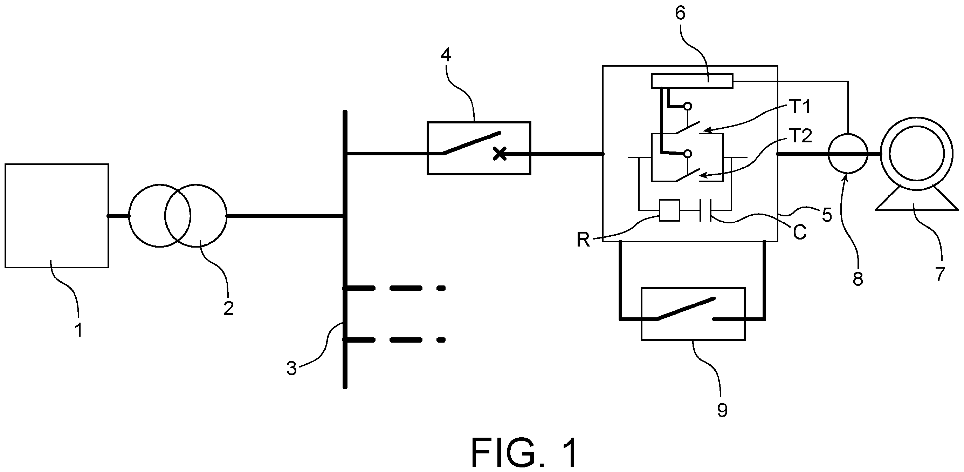

Un mode de réalisation d'une installation selon l'invention est décrit ci-après en référence à la figure 1. L'installation comprend un moteur électrique 7 alimenté par une source de tension 1. La source de tension 1 est reliée par l'intermédiaire d'un transformateur 2 à une travée 3 permettant d'alimenter plusieurs cellules en parallèle dont une seule est représentée sur la figure 1 et sur laquelle on retrouve un contacteur ou disjoncteur 4 relié au moteur 7 par l'intermédiaire d'un système de démarrage de moteur 5.

Un dispositif de contacteur 9 est disposé en parallèle du système de démarrage 5. Il permet de court-circuiter le système de démarrage 5 une fois que le moteur 7 a atteint une vitesse suffisante.

Le moteur est du type à courant alternatif, notamment du type asynchrone. Il est triphasé. Sa tension nominale est supérieure à 380 V, voire supérieure à 1000 V, voire supérieure ou égale à 5,5 kV.

Le moteur est donc connecté au réseau électrique, en particulier à la source de tension 1, via un système de démarrage de moteur 5. Le système de démarrage du moteur 5 comprend principalement un interrupteur commandé sur chaque ligne d'alimentation du moteur, par exemple, un interrupteur commandé sur chacune des trois phases d'alimentation d'un moteur triphasé. L'interrupteur commandé peut être un transistor de puissance. Avantageusement, l'interrupteur commandé comprend un thyristor, en particulier deux thyristors T1, T2 montés tête-bêche en parallèle.

Le système de démarrage du moteur 5 comprend également un circuit d'amortissement (« snubber ») installé en parallèle de l'interrupteur commandé et constitué du montage série d'une résistance R et d'un condensateur C.

Le système de démarrage du moteur 5 comprend également un dispositif de commande 6 de l'interrupteur commandé. Dans le cas représenté, le dispositif de commande comprend deux sorties attaquant chacune une gâchette de l'un des thyristors T1, T2. Ainsi, le dispositif de commande 6 permet de générer une impulsion commandant le déclenchement de la commutation de chacun des thyristors T1, T2.

Le dispositif de commande 6 comprend des éléments matériels et/ou logiciels configurés, pour chaque alternance de la tension alternative de la source de tension 1, de manière à déterminer un instant de fermeture à partir d'une mesure de la dérivée du courant circulant sur une ligne d'alimentation du moteur, par exemple le courant traversant l'interrupteur ou le circuit d'amortissement RC, et à actionner la fermeture de l'interrupteur commandé à cet instant de fermeture déterminé. La mesure est réalisée par un capteur de mesure de la dérivée du courant 8 connecté entre le système de commande 6 et le moteur 7, plus précisément sur l'une des lignes d'alimentation du moteur triphasé. Le capteur de mesure de la dérivée du courant 8 est typiquement un capteur de Rogowski.

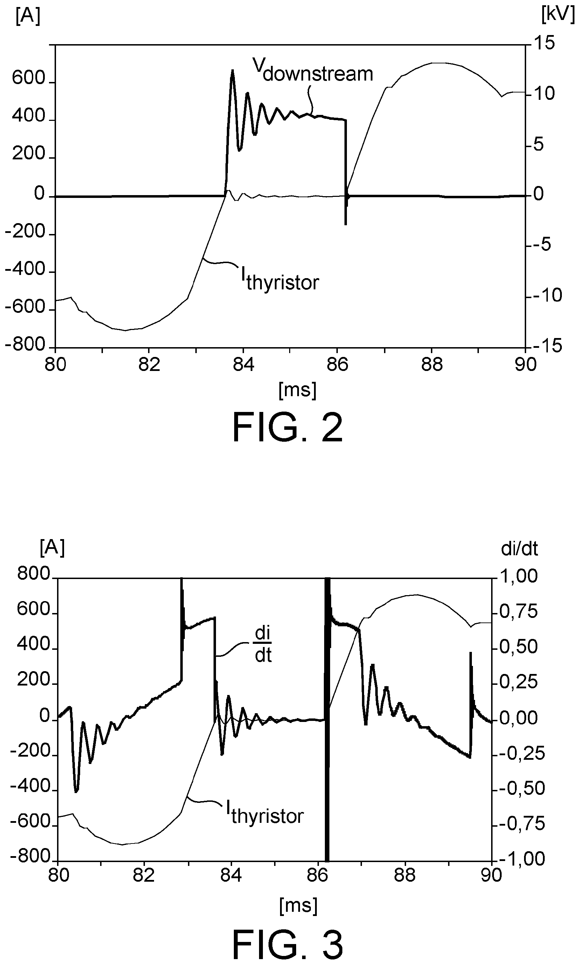

On a représenté sur la figure 2 les évolutions du courant parcourant l'interrupteur $I_{thyristor}$ (axe de gauche ; en trait fin) et du potentiel électrique en aval $V_{downstream}$ de l'interrupteur (axe de droite ; en trait gras). La figure 2 est centrée sur une phase d'ouverture de l'interrupteur initiée par l'annulation du courant $I_{thyristor}$. Ce potentiel $V_{downstream}$ présente, au cours de la phase d'ouverture de l'interrupteur, une composante à la fréquence nominale du réseau assimilable à une composante continue pour la durée d'interruption du courant, et une composante transitoire et oscillatoire de fréquence plusieurs fois supérieure à la fréquence nominale du réseau.

On a représenté sur la figure 3 les évolutions du courant parcourant l'interrupteur $I_{thyristor}$ (axe de gauche ; en trait fin) et de la dérivée di/dt de ce courant (axe de droite ; en trait gras), toujours centrées sur une phase d'ouverture de l'interrupteur commandé.

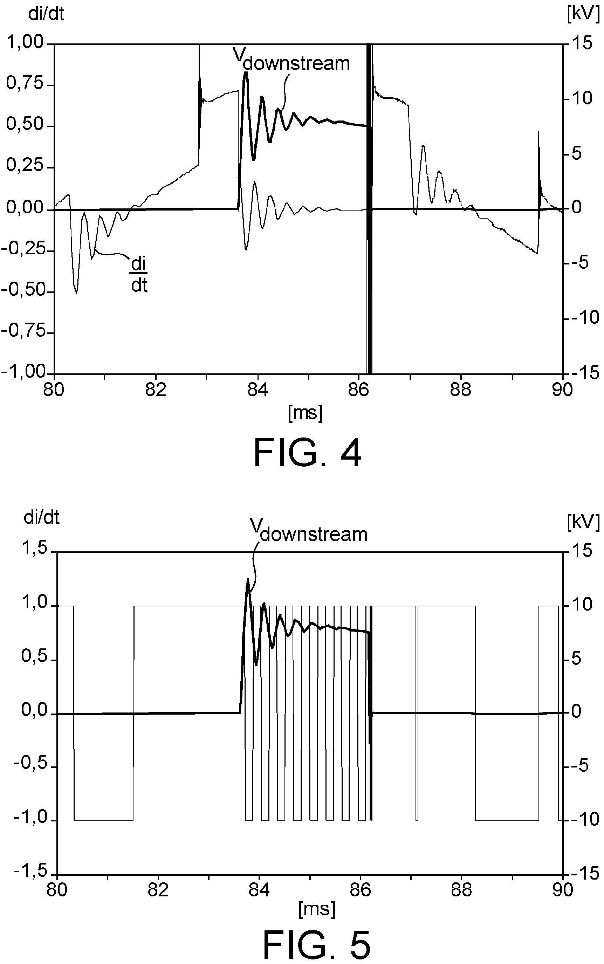

La figure 4, également centrée sur une phase d'ouverture de l'interrupteur, représente quant à elle les évolutions de la dérivée di/dt du courant $I_{thyristor}$ traversant l'interrupteur (axe de droite ; en trait fin) et du potentiel électrique en aval $V_{downstream}$ de l'interrupteur (axe de gauche ; en trait gras). Ces deux signaux sont quasiment en complète opposition de phase (décalage de phase de 180°). Le décalage de phase exact est fonction de la fréquence de ces signaux et des paramètres du circuit d'amortissement RC. Ces deux facteurs peuvent être connus avec suffisamment de précision, la fréquence étant mesurée à partir de la durée séparant deux passages à zéro consécutifs de la dérivée du courant comme détaillé ci-après. Le décalage de phase s'exprime alors selon $\Delta = 180° - \varphi_{transient}$, avec

$$\varphi_{transient} = \arctan(\frac{1}{w.RC})$$ et où R et C sont les valeurs de la résistance et du condensateur du circuit d'amortissement et w la pulsation électrique proportionnelle à la fréquence d'oscillation de la tension transitoire $V_{downstream}$.

La dérivée du courant $I_{thyristor}$ est ainsi une réplique opposée de la tension transitoire $V_{downstream}$ sur laquelle peut être réalisée la synchronisation de la commutation de l'interrupteur commandé comme détaillé dans la demande de brevet WO 2013/038094 A2.

Le dispositif de mesure de la dérivée du courant 8, typiquement un capteur de Rogowski, présente l'avantage de délivrer un signal avec un délai négligeable, inférieur à la microseconde, et non affecté par la fréquence du courant dans le spectre des fréquences transitoires rencontré en pratique (1-5kHz).

La mesure de la dérivée du courant présente en outre l'avantage de fournir un signal centré sur zéro (la composante à fréquence nominale étant très faible et négligeable dans les premiers cycles d'oscillation, par opposition à la tension transitoire $V_{downstream}$) et d'amplifier les oscillations rapides liées au blocage du thyristor. La dérivée du courant correspondant en effet à l'amplitude du courant multipliée par la pulsation électrique du transitoire, il s'agit d'un signal naturellement amplifié à haute fréquence même si son amplitude peut être proche de zéro.

La détermination d'un instant de blocage de l'interrupteur à partir d'une mesure de la dérivée du courant de phase comprend la détection des instants de passage par zéro de la dérivée du courant et le calcul, par un microprocesseur, à partir desdits instants de passage par zéro, de la fréquence d'une tension transitoire aux bornes de l'interrupteur apparaissant suite à un passage par zéro du courant traversant l'interrupteur, c'est-à-dire suite à l'ouverture de l'interrupteur. La détection est réalisée par une chaîne d'acquisition analogique, comprenant entre autres des amplificateurs de signal dont le rôle est d'augmenter la précision de la détection des instants de passage par zéro de la dérivée, et des composants conventionnels de détection de passage par zéro.

Par exemple, la durée séparant les deux premiers instants de passage à zéro de la dérivée du courant suite à l'ouverture de l'interrupteur peut être calculée, ce qui permet de déduire la demi-période des oscillations de la tension transitoire aux bornes de l'interrupteur. La période complète T peut alors être calculée, de même que la fréquence associée.

Cette fréquence d'oscillation de la tension transitoire correspond ainsi à la fréquence d'un signal rendu rectangulaire par la chaîne d'acquisition, avec l'écrêtage par ladite chaîne, dont les fronts coïncident avec les instants de passage par zéro de la dérivée du courant. On a ainsi représenté sur la figure 5, toujours centrée sur une phase d'ouverture de l'interrupteur, les évolutions d'un tel signal rectangulaire représentatif des passages par zéro de la dérivée di/dt du courant $I_{thyristor}$ traversant l'interrupteur (axe de droite ; en trait fin) et du potentiel électrique en aval $V_{downstream}$ de l'interrupteur (axe de gauche ; en trait gras).

L'utilisation d'une mesure de la dérivée du courant permet de passer outre les traitements complexes qui sont nécessaires lorsque des mesures de tension ou de courant sont utilisées. Cette simplicité se traduit par des gains en termes de coût.

Le capteur de Rogowski n'introduit pas de variation de phase significative dans le signal de dérivée du courant mesuré, de sorte qu'une calibration par rapport à la fréquence d'oscillation de la tension transitoire n'est pas nécessaire puisque ces signaux sont à la même fréquence. En revanche, une correction des instants de passage à zéro de la dérivée peut être mise en oeuvre pour remonter aux instants correspondant aux crêtes négatives de la tension sur lesquels on cherche à réaliser les mises en état fermé des thyristors, selon la formule

$$\varphi_{transient} = \arctan(\frac{1}{w.RC})\,.$$

Le capteur de Rogowski permet en outre de réaliser une fermeture de l'interrupteur de manière très précise (avec une déviation maximale de l'ordre de 10 μs), ce qui s'avère intéressant dans certaines applications, par exemple la réduction du courant transitoire lors de la fermeture de l'interrupteur.

Dans un mode de réalisation possible, le dispositif de commande 6 est configuré, pour chaque alternance de la tension alternative de la source de tension, pour que l'instant de fermeture déterminé corresponde à une durée d'ouverture de l'interrupteur. En d'autres termes, le dispositif de commande 6 met en oeuvre un contrôle « delta-gamma » de démarrage du moteur, c'est-à-dire un contrôle de type gamma réalisé sur un signal autre que le courant, en l'occurrence la dérivée « delta » du courant.

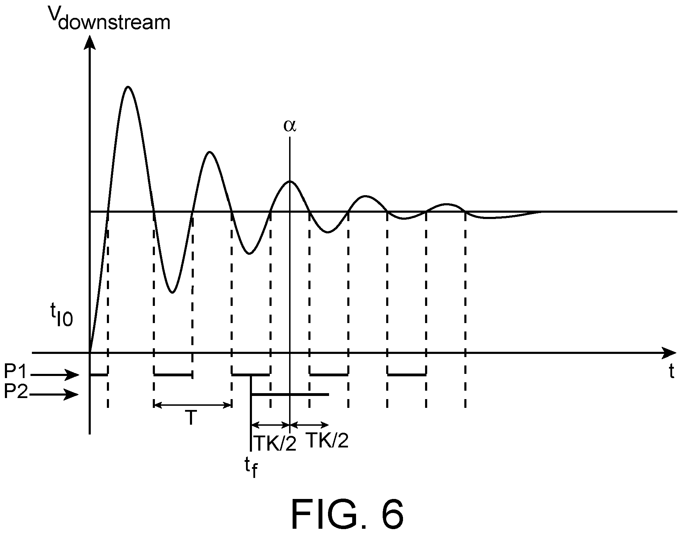

Comme explicité dans la demande de brevet WO 2013/038094 A2, et comme représenté sur la figure 6, la détermination de l'instant de fermeture $t_f$ peut comprendre, pour chaque alternance de la tension alternative de la source, la détermination d'une première plage temporelle P1 à partir de la fréquence des passages à zéro de la dérivée du courant, l'instant de fermeture appartenant à la première plage temporelle.

Cette première plage temporelle P1 peut être définie comme comprenant l'ensemble des instants t vérifiant la formule suivante : $T.(k-x) < t-t_{I0} < T.(k+y)$, où $t_{I0}$

est l'instant d'ouverture de l'interrupteur, par exemple détecté comme le premier front montant suivant une période où la valeur de di/dt est plutôt constante, T la période correspondant à la fréquence des passages à zéro de la dérivée du courant, k est un entier naturel compris entre 1 et un entier naturel n, x et y des nombres strictement compris entre 0 et 1. Les nombres x et y sont de préférence compris entre 0 et 0,3, de préférence entre 0 et 0,25, encore plus de préférence entre 0 et 0,2. Ils sont avantageusement identiques.

Cette première plage temporelle P1 est discontinue et couvre ainsi les instants pendant lesquels la valeur de la tension aux bornes de l'interrupteur commandé est minimisée. En commandant la fermeture de l'interrupteur alors que cette tension est minimisée, on minimise le courant transitoire traversant l'interrupteur suite à la fermeture. Par exemple avec x=y=0,25, la première plage temporelle comprend les alternances négatives de la composante alternative de la tension aux bornes de l'interrupteur.

Comme également explicité dans la demande de brevet WO 2013/038094 A2, la détermination de l'instant de fermeture peut en outre comprendre, pour chaque alternance de la tension alternative de la source, la détermination d'une seconde plage temporelle P2 à partir d'une valeur temporelle de déclenchement $\alpha$ suite à un passage par zéro de la tension alternative de la source, l'instant de fermeture $t_f$ ayant lieu dès l'instant commun à la première et à la deuxième plage temporelle.

La deuxième plage temporelle peut comprendre l'ensemble des instants t vérifiant

$$\left| t - t_{V0} - \alpha \right| < \frac{T}{2} \text{ , où } t_{v0} \text{ est l'instant où la tension}$$

alternative de la source s'annule, T la période correspondant à la fréquence des passages à zéro de la dérivée du courant et $\alpha$ la valeur temporelle de déclenchement suite à un passage par zéro de la tension alternative de la source, $\alpha$ étant inférieur à la demi-période de la tension alternative de la source.

La valeur temporelle de déclenchement $\alpha$ traduit en mode de commande alpha la durée séparant l'instant $t_{v0}$ d'annulation de la tension de la source alternative et l'instant de fermeture $t_f$. Cette valeur $\alpha$ est définie en fonction de différents paramètres, notamment le couple mécanique désiré au démarrage, se traduisant par une tension efficace à atteindre à ses bornes. Dans la phase de démarrage, plus la vitesse augmente et plus le temps d'ouverture de l'interrupteur commandé diminue. Il s'ensuit que la valeur efficace de la tension électrique appliquée au moteur augmente progressivement.

Dans le cadre de la commande selon l'invention, l'interrupteur commandé est commuté en fermeture dès le premier instant $t_f$ commun aux première et deuxième plages temporelles, comme représenté à la figure 6. Il se produit donc un léger décalage relativement à la valeur a, mais ce décalage est faible compte tenu de la fréquence des oscillations de la tension. L'influence de ce décalage sur la valeur efficace de la tension appliquée au moteur est donc tout à fait négligeable ou ne comporte pas d'inconvénients sur le fonctionnement global du démarreur progressif.

Le procédé tel que précédemment décrit est itéré sur chaque alternance de la tension alternative de la source de tension. Ainsi, on définit deux plages temporelles par alternance de la tension alternative de la source. Et lorsqu'on utilise un interrupteur commandé comprenant un premier thyristor et un deuxième thyristor, on utilise le premier thyristor lors des alternances positives et le deuxième thyristor lors des alternances négatives.

L'invention n'est pas limitée au procédé de commande et à un système de démarrage tels que précédemment décrits, mais s'étend également à un produit programme d'ordinateur comportant des instructions de code de programme pour la détermination d'un instant de fermeture de l'interrupteur selon le procédé de commande.

## Revendications

1. Procédé de commande d'un interrupteur (T1, T2) pilotant une ligne d'alimentation d'un moteur électrique (7) depuis une source de tension alternative (1), comprenant la détermination d'un instant de fermeture ($t_f$) de l'interrupteur à partir d'une mesure de la dérivée du courant circulant sur la ligne d'alimentation, **caractérisé en ce que** ladite détermination de l'instant de fermeture comprend la détection des instants de passage par zéro de la dérivée du courant et le calcul, à partir desdits instants de passage par zéro, de la fréquence d'une tension transitoire aux bornes de l'interrupteur apparaissant suite à un passage par zéro du courant traversant l'interrupteur lors de l'ouverture de l'interrupteur.

2. Procédé selon la revendication 1, dans lequel la fréquence de la tension transitoire correspond à la fréquence d'un signal rectangulaire dont les fronts coïncident avec les instants de passage par zéro de la dérivée du courant.

3. Procédé selon l'une quelconque des revendications 1 à 2, dans lequel la détermination de l'instant de fermeture consiste à déterminer une durée d'ouverture de l'interrupteur.

4. Procédé selon la revendication 3, dans lequel la détermination de l'instant de fermeture comprend la détermination d'une première plage temporelle (P1) à partir de la fréquence des passages à zéro de la dérivée du courant, l'instant de fermeture ($t_f$) appartenant à la première plage temporelle.

5. Procédé selon la revendication 4, dans lequel la première plage temporelle (P1) est définie comme comprenant l'ensemble des instants t vérifiant la formule suivante : T.(k-x) < t-$t_{I0}$ < T.(k+y), où $t_{I0}$ est l'instant d'ouverture de l'interrupteur, T la période correspondant à la fréquence des passages par zéro de la dérivée du courant, k un entier naturel compris entre 1 et un entier naturel n, x et y des nombres strictement compris entre 0 et 1.

6. Procédé selon la revendication 5, dans lequel x et y sont compris entre 0 et 0,3, de préférence entre 0 et 0,25, encore plus de préférence entre 0 et 0,2.

7. Procédé selon l'une quelconque des revendications 4 à 6, dans lequel la détermination de l'instant de fermeture comprend la détermination d'une seconde plage temporelle (P2) à partir d'une valeur temporelle de déclenchement ($\alpha$) suite à un passage par zéro de la tension alternative de la source, l'instant de fermeture ($t_f$) ayant lieu dès l'instant commun à la première et à la deuxième plage temporelle.

8. Procédé selon la revendication 7, dans lequel la deuxième plage temporelle comprend l'ensemble des instants t vérifiant $\left| t - t_{V0} - \alpha \right| < \frac{T}{2}$ , où $t_{v0}$ est l'instant où la tension alternative de la source s'annule, T l'inverse de la fréquence des passages par zéro de la dérivée du courant et $\alpha$ la valeur temporelle de déclenchement suite à un passage par zéro de la tension alternative de la source, $\alpha$ étant inférieur à la demi-période de la tension alternative de la source.

9. Procédé selon l'une quelconque des revendications 1 à 8, dans lequel la mesure de la dérivée du courant circulant sur la ligne d'alimentation est réalisée par un capteur de Rogowski.

10. Système de démarrage (5) d'un moteur électrique (7), comprenant un interrupteur (T1, T2) pilotant l'alimentation du moteur depuis une source de tension alternative (1) via une ligne d'alimentation du moteur et des moyens de détermination d'un instant de fermeture ($t_f$) de l'interrupteur à partir d'une mesure de la dérivée du courant circulant sur la ligne d'alimentation, **caractérisé en ce que** lesdits moyens de détermination de l'instant de fermeture comprennent des éléments matériels et/ou logiciels (6) de. détection des instants de passage par zéro de la dérivée du courant et de calcul, à partir desdits instants de passage par zéro, de la fréquence d'une tension transitoire aux bornes de l'interrupteur apparaissant suite à un passage par zéro du courant traversant l'interrupteur lors de l'ouverture de l'interrupteur.

11. Produit programme d'ordinateur comportant des instructions de code de programme pour la détermination d'un instant de fermeture de l'interrupteur selon le procédé de l'une quelconque des revendications 1 à 9 lorsque ledit programme est exécuté sur un ordinateur.

**Patentansprüche**

1. Verfahren zum Steuern eines Schalters (T1, T2), der eine Leitung zur Versorgung eines Elektromotors (7) von einer Wechselspannungsquelle (1) aus steuert, umfassend das Bestimmen eines Schließzeitpunkts ($t_f$) des Schalters ausgehend von einer Messung der Ableitung des in der Versorgungsleitung zirkulierenden Stroms, **dadurch gekennzeichnet, dass** das Bestimmen des Schließzeitpunkts das Erkennen der Zeitpunkte für den Nulldurchgang der Ableitung des Stroms und das Berechnen, ausgehend von den Zeitpunkten für den Nulldurchgang, der Frequenz einer transienten Spannung an den Klemmen des Schalters, die infolge eines Nulldurchgangs des den Schalter durchfließenden Stroms beim Öffnen des Schalters auftritt, umfasst.

2. Verfahren nach Anspruch 1, bei dem die Frequenz der transienten Spannung der Frequenz eines Rechtecksignals entspricht, dessen Vorderflanken mit den Zeitpunkten für den Nulldurchgang der Ableitung des Stroms übereinstimmen.

3. Verfahren nach einem der Ansprüche 1 bis 2, bei dem das Bestimmen des Schließzeitpunkts darin besteht, eine Öffnungsdauer des Schalters zu bestimmen.

4. Verfahren nach Anspruch 3, bei dem das Bestimmen des Schließzeitpunkts das Bestimmen eines ersten Zeitfensters (P1) ausgehend von der Frequenz der Nulldurchgänge der Ableitung des Stroms umfasst, wobei der Schließzeitpunkt ($t_f$) dem ersten Zeitfenster zugehörig ist.

5. Verfahren nach Anspruch 4, bei dem das erste Zeitfenster (P1) so definiert ist, dass es sämtliche Zeitpunkte t umfasst, welche die folgende Formel erfüllen: T.(k-x) <t-$t_{IO}$ < T.(k+y), wobei $t_{IO}$ der Öffnungszeitpunkt des Schalters ist, T die Periode ist, welche der Frequenz der Nulldurchgänge der Ableitung des Stroms entspricht, K eine natürliche Zahl zwischen 1 und einer natürlichen Zahl n ist und x und y Zahlen strikt zwischen 0 und 1 sind.

6. Verfahren nach Anspruch 5, bei dem x und y zwischen 0 und 0,3 betragen, vorzugsweise zwischen 0 und 0,25, weiter bevorzugt zwischen 0 und 0,2.

7. Verfahren nach einem der Ansprüche 4 bis 6, bei dem das Bestimmen des Schließzeitpunkts des Bestimmen eines zweiten Zeitfensters (P2) ausgehend von einem Auslösezeitwert ($\alpha$) infolge eines Nulldurchgangs der Wechselspannung der Quelle umfasst, wobei der Schließzeitpunkt ($t_f$) ab dem Zeitpunkt stattfindet, der dem ersten und dem zweiten Zeitfenster gemeinsam ist.

8. Verfahren nach Anspruch 7, bei dem das zweite Zeitfenster sämtliche Zeitpunkte umfasst, die $|t-t_{v0}-\alpha|<T/2$ erfüllen, wobei $t_{v0}$ der Zeitpunkt ist, wo die Wechselspannung der Quelle zusammenbricht, T der Kehrwert der Frequenz der Nulldurchgänge der Ableitung des Stroms ist und $\alpha$ der Auslösezeitwert infolge eines Nulldurchgangs der Wechselspannung der Quelle ist, wobei $\alpha$ kleiner als die Halbperiode der Wechselspannung der Quelle ist.

9. Verfahren nach einem der Ansprüche 1 bis 8, bei dem die Messung der Ableitung des Stroms, der in der Versorgungsleitung zirkuliert, durch einen Rogowski-Sensor erfolgt.

10. System zum Anlassen (5) eines Elektromotors (7), umfassend eine Leitung zur Versorgung des Motors von einer Wechselspannungsquelle aus, Einrichtungen zum Messen einer Ableitung des Stroms, der in der Versorgungsleitung zirkuliert, und einen Schalter (T1, T2), der die Versorgung des Motors von der Wechselspannungsquelle (1) aus steuert, umfassend das Bestimmen eines Schließzeitpunkts des Schalters ausgehend von der Messung der Ableitung, **dadurch gekennzeichnet**, es Hardware- und/oder Softwareelemente (6) zum Ausführen des Verfahrens nach einem der Ansprüche 1 bis 9 aufweist.

11. Computerprogrammprodukt, aufweisend Programmcodeanweisungen zum Bestimmen eines Schließzeitpunkts des Schalters nach dem Verfahren eines der Ansprüche 1 bis 9, wenn das Programm auf einem Computer ausgeführt wird.

**Claims**

1. A method for controlling a switch (T1, T2) that controls an electric motor (7) power supply line from an alternating voltage source (1), comprising determining a switch closing instant ($t_f$) from a measurement of the derivative of the current carried on the power supply line, **characterized in that** said determining includes detecting the instants at which the derivative of the current passes through zero and calculating, from said instants, the frequency of a transient voltage that appears at the terminals of the switch following a passage through zero of the current circulating through the switch when the switch is opened.

2. The method according to claim 1, in which the frequency of the transient voltage corresponds to the frequency of a rectangular signal with fronts that coincide with the instants at which the derivative of the current passes through zero.

3. The method according to any one of claims 1 and 2, in which determining the switch closing instant consists of determining a switch opening duration.

4. The method according to claim 3, in which the switch closing instant is determined by determining a first time range (P1) starting from the frequency of passages of the derivative of the current through zero, the switch closing instant ($t_f$) being included in the first time range.

5. The method according to claim 4, in which the first time range (P1) is defined as including all instants t satisfying the formula $T.(k-x) < t-t_{l0} < T.(k+y)$, where $t_{l0}$ is the switch opening instant, T is the period corresponding to the frequency at which the derivative of the current passes through zero, k is a natural integer between 1 and a natural integer n, and x and y are numbers strictly between 0 and 1.

6. The method according to claim 5, in which x and y are between 0 and 0.3, preferably between 0 and 0.25, and even more preferably between 0 and 0.2.

7. The method according to any one of claims 4 to 6, in which determining the switch closing instant includes determining a second time range (P2) starting from a trigger time value ($\alpha$) subsequent to the passage of the alternating source voltage through zero, the switch closing instant ($t_f$) occurring at the instant common to the first and the second time range.

8. The method according to claim 7, in which the second time range includes all instants t satisfying

$$|t - t_{V0} - \alpha| < \frac{T}{2},$$ where $t_{v0}$ is the time at which the alternating voltage of the source cancels out, T is the inverse of the frequency of passages of the derivative of the current through zero, and $\alpha$ is the trigger time value following passage of the alternating source voltage through zero, $\alpha$ being less than the half-period of the alternating source voltage.

9. The method according to one of claims 1 to 8, in which the derivative of the current circulating on the power supply line is measured by a Rogowski sensor.

10. A starter system (5) for an electric motor (7), including a switch (T1, T2) controlling the motor power supply from an alternating voltage source (1) through a power supply line of the electric motor and means for determining a switch closing instant ($t_f$) from a measurement of the derivative of the current carried on the power supply line, **characterized in that** said means for determining the switch closing instant includes hardware and/or software means (6) for detecting the instants at which the derivative of the current passes through zero and calculating, from said instants, the frequency of a transient voltage that appears at the terminals of the switch following a passage through zero of the current circulating through the switch when the switch is opened.

11. A computer program product including program code instructions to determine a switch closing instant using the method according to any one of claims 1 to 10 when said program is executed on a computer.

FIG. 1

EP 2 937 987 B1

FIG. 2

FIG. 3

FIG. 4

FIG. 5

FIG. 6

EP 2 937 987 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0189073 A2
- FR 2980058

- WO 2013038094 A2